# EUROPEAN PATENT APPLICATION

(11) **EP 1 942 018 A1**
(43) Date of publication of application: **09.07.2008**
(21) Application number: 07000008.8
(22) Date of filing: 02.01.2007
(51) Int. Cl.: B60C 23/04

(54) **Connecting assembly for a wireless tire pressure monitoring apparatus**

(71) Applicant: JOSN ELECTRONIC CO., LTD., Hsin Tien City T'ai pei 231 (TW)
(72) Inventor: Liao, Ben, Hsin Tien City Taipei County 231 (TW)
(74) Representative: Casalonga, Axel

(57) **Abstract**

A connecting assembly for a wireless tire pressure monitoring apparatus having a main body (30) formed to be a branch joint with a first tube (31), a second tube (32) and a third tube (33), a penetration needle (40) with a first vent hole (41) being positioned at the port of the first tube (31); an adapter (50) attached to an end port of the first tube (31); a actuating pin disposed within the first tube (31) and the third tube (33); and the air nozzle (60) screwed in the third tube (33), the middle part of the sleeve portion (53) having an second vent hole (62) in the axial direction. When the first tube (31) is mounted on the inflation valve (21), the air pressure within the tire (20) will pass through the first tube (31). In this way, the tire pressure detector joined to the second tube (32) can detect the tire pressure value at any time. It is not necessary to remove the tire pressure detector (10) on the second tube (32) for the inflation operation. Instead, the inflation of the tire can be done via the third tube (33), thereby facilitating the inflation of the internal tires to a great extent.

## Description

The invention relates to a connecting assembly for a wireless tire pressure monitoring apparatus, and more particularly, to an apparatus that is suitable for installation on the internal tires of heavy vehicles without affecting the tire inflation operation.

The tires of all kinds of vehicles have to be kept at a normal tire pressure. If the tire has a lower tire pressure (than 28 psi) or runs at a high temperature, the driving safety will be affected. After some time of driving, exposure to the sunlight or the fall of temperature at night, the tire may leak to some extent and the tire pressure will fall down under a normal pressure of 28 psi. It brings a potential danger for the driving safety. Particularly, if one tire of a high speeding vehicle breaks up due to the bad airtightness of the tire valve leading to the insufficient tire pressure, the result is very destructive.

Many experts specializing in this field have tried to develop a lot of wireless tire pressure monitoring apparatuses for inspecting the tire pressure. These products permit a wireless transmission of the tire pressure signal to a receiving unit within a driver's cab. In this way, the tire pressure can be shown for learning about the abnormal state of the tire pressure. Such a structure is disclosed by U.S. Pat. No. 6,993,962 filed by the same inventor of the invention.

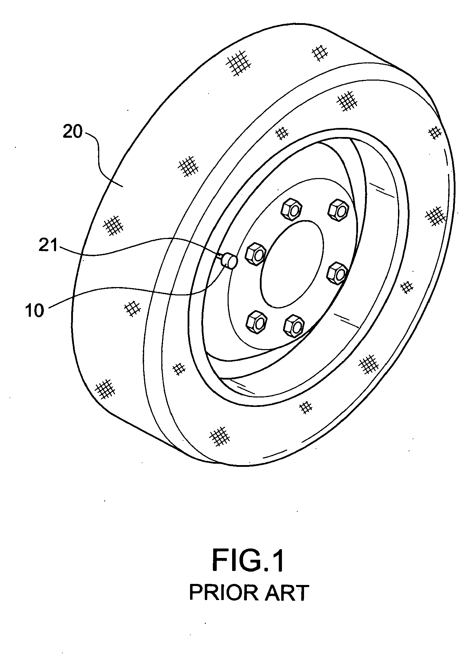

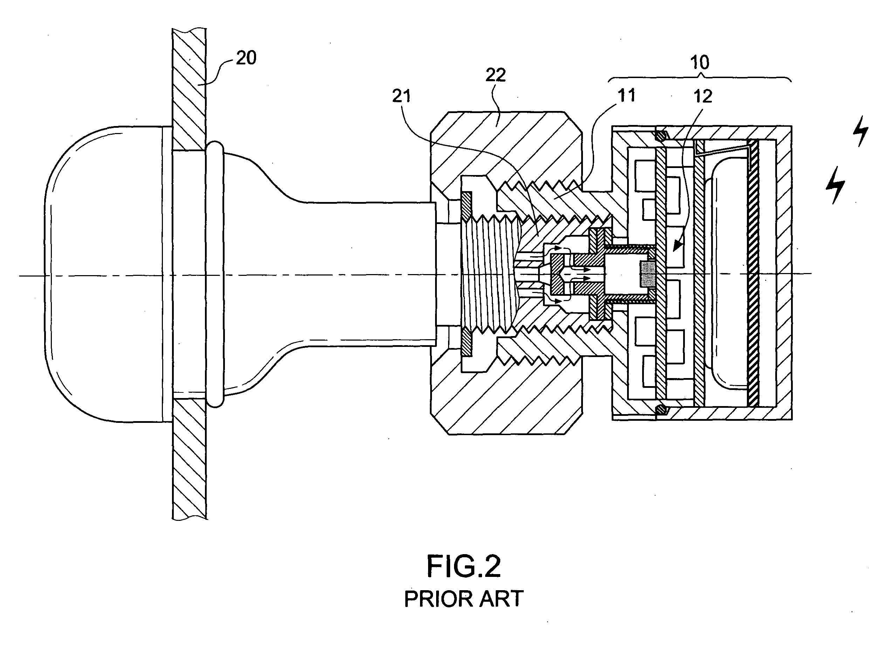

As shown in FIGS. 1 and 2, a conventional tire pressure monitoring apparatus 10 includes an adapter 11 at the front end thereof that is screwed on an inflation valve 21 at the external side of the tire 20. A pressure-detecting element 12 is disposed within the tire pressure detector 10 for determining the tire pressure value of the tire 20. Meanwhile, a signal is transmitted to a receiving and displaying apparatus (not shown) within the vehicle. Besides, a lock nut 22 is installed for preventing the tire pressure detector 10 from unauthorized removal by the act of stealing.

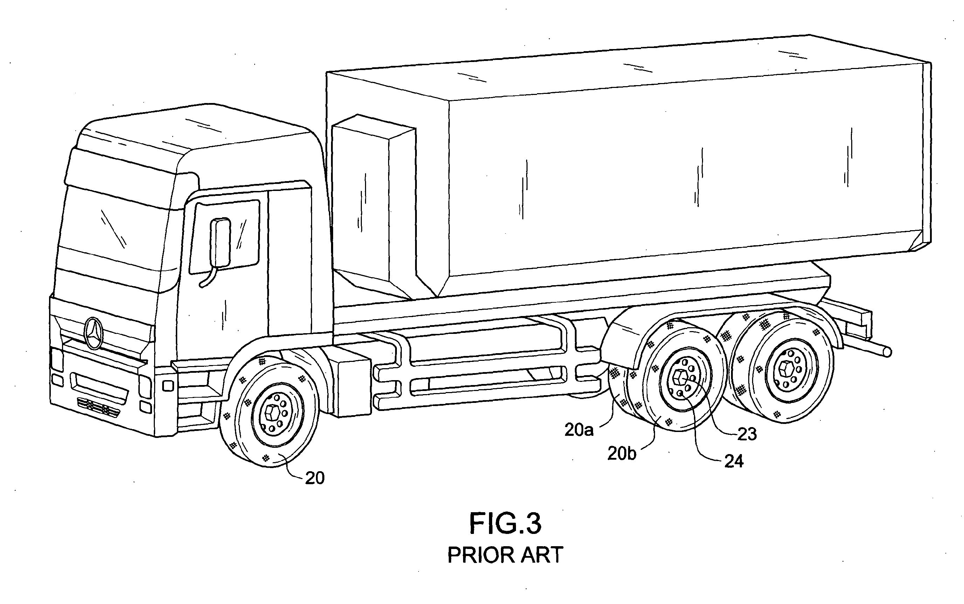

The above-mentioned tire pressure detector 10 has no problem in installing at a normal vehicle and applying thereto. However, some consumers have provided a few feedbacks. As shown in FIG. 3, the heavy vehicles like trucks or tourist coaches have a left and a right tire 20 at the front while the left and right tires at the rear each has a combination of an internal and an external tire 20a, 20b both of which are mounted on a drive shaft 23. Accordingly, the installation of the front tire 20 and the external tire 20b has no problem. However, the internal tire 20a will be blocked by the external tire 20b. Passing through the hole 24 of the external wheel rim is therefore required for the inflation. In this way, the inflation of the internal tire 20a via the inflation valve (not shown) is possible. If the tire pressure detector 10, as shown in FIG. 2, is installed on the inflation valve at the internal side, the tire pressure detector 10 has to be removed first prior to the inflation. Nevertheless, the removal is much inconvenient since the tire pressure detector 10 is disposed next to the external tire 20b and therefore only little free room is available. In addition, it brings also difficulties to re-screw the tire pressure detector 10 in position when each inflation operation is completed. To carry out the above-mentioned operation within such a narrow space between the internal and external tires does consume much time and cost. This doesn't fulfill the requirement of the economic benefit.

It is a primary object of the invention to provide a connecting assembly for a wireless tire pressure monitoring apparatus that is formed in a branch joint with a first tube, a second tube, and a third tube. When the first tube is mounted on the inflation valve, the air pressure within the tire will pass through the first tube. In this way, the tire pressure detector joined to the second tube can detect the tire pressure value at any time. It is not necessary to remove the tire pressure detector on the second tube for the inflation operation. Instead, the inflation of the tire can be done via the third tube, thereby facilitating the inflation of the internal tires to a great extent.

In order to achieve the above-mentioned objects, a connecting assembly for a wireless tire pressure monitoring apparatus in accordance with the invention includes:
a) a main body formed to be a branch joint with a first tube, a second tube and a third tube, a penetration needle with a first vent hole being positioned at the port of the first tube, the external wall of the second tube being fitted with a first threaded section, a second threaded section being formed on the internal wall of the third tube, the external wall of the third tube being provided with a third threaded section having the same diameter as an inflation valve;
b) an adapter attached to an end port of the first tube and mounted on the external wall of the penetration needle, the internal wall of the adapter being provided with a fourth thread screwed to the inflation valve; and
c) an actuating pin axially disposed within the first tube and the third tube, the middle part of the actuating pin having a compression body, a spring being disposed between the internal side of the compression body and the penetration needle; and
d) a middle tube screwed into the second threaded section of the third tube, the center of the middle tube having in the axial direction a second vent hole, the external section of the actuating pin extending from the second vent hole for a certain length such that the compression body lies against the internal side of the second vent hole by means of the spring mounted on the internal section of the compression body, thereby keeping the third tube in a closed position in the normal state.

The accomplishment of this and other objects of the invention will become apparent from the following descriptions and its accompanying figures of which:
FIG. 1 is a perspective view of a conventional tire pressure detector installed on a tire valve;
FIG. 2 is a cutaway view of the conventional tire pressure detector installed on a tire valve;
FIG. 3 is a perspective view of the tires of a heavy vehicle of the prior art;
FIG. 4 is a perspective view of a preferred embodiment of the invention;
FIG. 5 is a cutaway view of the preferred embodiment of the invention in a normal position; and
FIG. 6 is a cutaway view of the preferred embodiment of the invention in an inflating position.

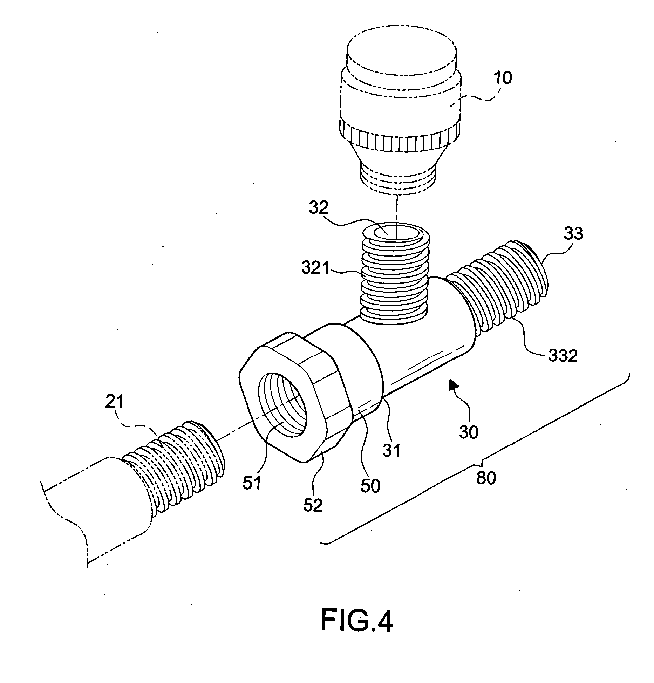

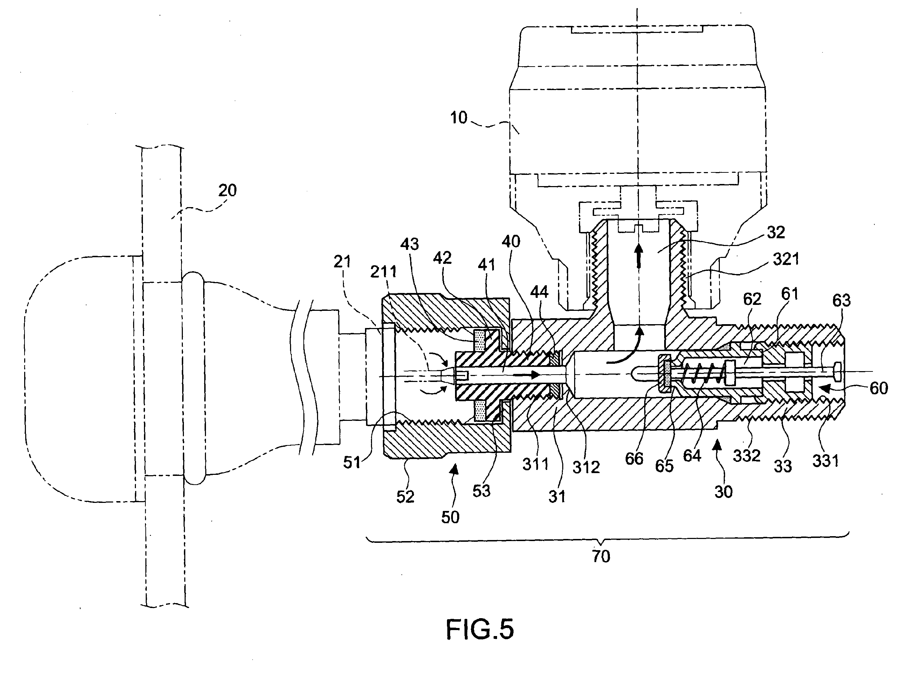

First of all, referring to FIGS. 4 and 5, a connecting assembly 70 in accordance with the invention includes a main body 30, an adapter 50, and an air nozzle 60.

The main body 30 is formed in a branch joint with a first tube 31, a second tube 32, and a third tube 33. In the embodiment according to FIG. 4, the first tube 31 and the third tube 33 are communicated with each other in axial direction while the second tube 32 is perpendicular to the first tube 31 and the third tube 33, thereby creating a T-form. A penetration needle 40 with a first vent hole 41 is positioned within the first tube 31. The external wall of the second tube 32 is fitted with a first threaded section 321. Meanwhile, a second threaded section 331 is formed on the internal wall of the third tube 33. Moreover, the external wall of the third tube 33 is provided with a third threaded section 332 having the same diameter as an inflation valve 21.

The adapter 50 is attached to an end port of the first tube 31 and mounted on the external wall of the penetration needle 40. The internal wall of the adapter 50 is provided with a fourth thread 51 screwed to the inflation valve 21. The adapter 50 enables the connection between the main body 30 and the inflation valve 21 for establishing an airway. Therefore, the main body 30 can be integrally formed (not shown). Alternatively, the adapter 50 can be individually formed and then attached to the main body 30. These are applicable embodiments, but should not restricted thereto. It is preferable that the adapter 50 is pivotally attached to the main body 30. In other words, the adapter 50 creates a detachable connection to the main body 30. The adapter 50 includes a sleeve portion 53 with a smaller diameter at a contact end to the first tube 31. The middle part of the penetration needle 40 is provided with a flange 42 corresponding to the sleeve portion 53. The flange 42 is used to position the sleeve portion 53 without clamping it. In other words, a part of the penetration needle 40 is fixed within the first tube 31 such that the sleeve portion 53 of the adapter 50 is mounted between the penetration needle 40 and the first tube 31. In this way, a smooth connection between the main body 30 of a T-shaped connecting assembly 80 and the inflation valve 21 is established only by turning the adapter 50 without turning the main body 30 when the adapter 50 connects the main body 30 to the inflation valve 21. As shown in FIG. 4, the internal section of the adapter 50 is formed into a polygonal body such as into hexagonal body. Accordingly, the adapter 50 can be conveniently screwed with a screwing tool to the inflation valve 21.

As shown in FIG. 5, an air nozzle 60 having the same structure as the conventional inflation valve 21 is screwed into the third tube 33 such that the third tube 33 is normally maintained in a closed position.

The air nozzle 60 includes a hollow sleeve portion 61 screwed into the third tube 33, thereby forming a second vent hole 62. An actuating pin 63 axially passing through the second vent hole 62 is mounted on the sleeve portion 61. A spring 64 is mounted on the sleeve portion 61. The tail of the sleeve portion 61 is formed into a tapering air inlet 65. The tail of the actuating pin 63 includes a compression cover 66 for opening and closing the air inlet 65. In this way, the actuating pin 63 is shifted outwards in the ordinary state by the tension of the spring 64 such that the air inlet 65 of the second vent hole 62 is closed by the compression cover 66. As a result, the escape of the air pressure of the tire from the third tube 33 can be avoided.

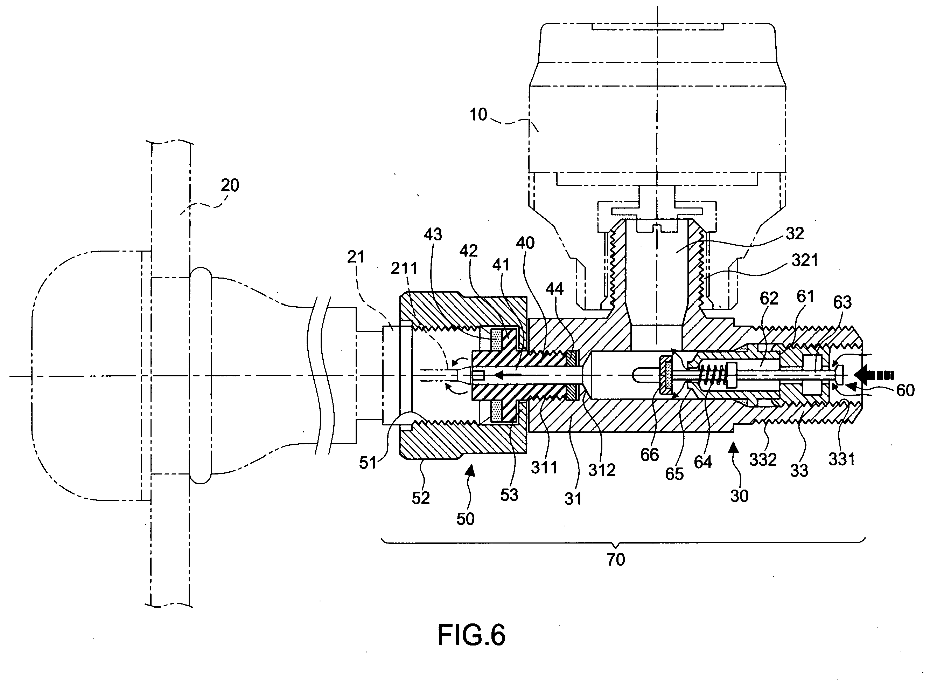

In order to ensure an optimal airtight state, a washer 44 is disposed on a contact surface between the penetration needle 40 and the first tube 31. Meanwhile, a sealing ring 43 is disposed at an internal side of the flange 42 of the penetration needle 40. The penetration needle 40 creates a threaded connection to the first tube 313 and lies against the washer 44. As shown in FIG. 5, the penetration needle 40 is forced to push against a valve stem 211 of the inflation valve 21 when the adapter 50 is screwed to the inflation valve 21. In this way, the air pressure within the tire 20 can flow through the first tube 31 into the main body 30. Besides, the air pressure won't escape from the third tube 33 since the third tube 33 is located in a closed position. At the same time, a tire pressure detector 10 mounted on the second tube 32 can perform the tire pressure detection operation. In case of the abnormal tire pressure, a corresponding signal will be transmitted to a receiving apparatus within the automobile. Therefore, the connecting assembly 70 in accordance with the invention may ensure a reliable connection of the tire pressure detector 10 to the second tube 32, thereby creating a free air passage. As shown in FIG. 6, the tire 20 can be directly inflated via the third tube 33 without pulling the tire pressure detector 10 out of the second tube 32. In other words, the third tube 33 has the same function as the inflation valve 21. In fitting an inflating adapter (not shown) into the third tube 33, the actuating pin 63 is retracted inwards such that the compression cover 66 is removed from the air inlet 65 of the second vent hole 62 for a smooth entrance of the inflating air. Thereafter, the inflating air passes through the first vent hole 41 of the penetration needle 40 of the first tube 31 so that the inflation via the inflation valve 21 can be done. After the inflation is completed, the actuating pin 63 is returned by the tension of the spring 64 to the closed position (see FIG. 5) where the compression cover 66 lies against the air inlet 65 of the second vent hole 62.

It can be concluded from the above-mentioned configuration that the invention employs the connecting assembly 70 so that it is not necessary to pull out the tire pressure detector 10 when the tire is inflated. It proves to be practical and convenient and effectively resolves the conventional problems. The tire pressure detector 10 is not the object of the invention so that its structure and principle are not detailed hereinafter. The tire pressure detector 10 in accordance with the invention relates to the patented product of U.S. Pat. No. 6,993,962. Other tire pressure detectors 10 are also applicable.

Many changes and modifications in the above-described embodiments of the invention can, of course, be carried out without departing from the scope thereof. Accordingly, to promote the progress in science and the useful arts, the invention is disclosed and is intended to be limited only by the scope of the appended claims.

## Claims

1. A connecting assembly for a wireless tire pressure monitoring apparatus, comprising:
a) a main body (30) formed to be a branch joint with a first tube (31), a second tube (32) and a third tube (33), a penetration needle with a first vent hole being positioned at the port of the first tube (31), the external wall of the second tube (32) being fitted with a first threaded section (321), a second threaded section (331)being formed on the internal wall of the third tube (33), the external wall of the third tube (33) being provided with a third threaded section (332) having the same diameter as an inflation valve (21);
b) an adapter (50) attached to an end port of the first tube (31) and mounted on the external wall of the penetration needle (40), the internal wall of the adapter (50) being provided with a fourth thread (51) screwed to the inflation valve (21); and
c) an air nozzle (60) having the same function as the conventional tire valve (21) and screwed into the third tube (33) such that the third tube (33) is maintained in a closed position in the normal state.

2. The connecting assembly for a wireless tire pressure monitoring apparatus as recited in claim 1 wherein the internal section of the adapter (50) is formed into a polygonal body.

3. The connecting assembly for a wireless tire pressure monitoring apparatus as recited in claim 1 wherein the adapter (50) is fixedly joined to the first tube (31) in a fixed

4. The connecting assembly for a wireless tire pressure monitoring apparatus as recited in claim 1 wherein the adapter (50) includes a sleeve portion (53) with a smaller diameter at a contact end to the first tube (31), and wherein the middle part of the penetration needle (40) is provided with a flange corresponding to the sleeve portion (53), and wherein the flange (42) is used to position the sleeve portion (53) without clamping it such that the adapter (50) is rotatably mounted.

5. The connecting assembly for a wireless tire pressure monitoring apparatus as recited in claim 4 wherein a washer (44) is disposed on a contact surface between the penetration needle (40) and the first tube (31), and wherein a sealing ring (43) is disposed at an internal side of the flange (42) of the penetration needle (40).

6. The connecting assembly for a wireless tire pressure monitoring apparatus as recited in claim 1 wherein the air nozzle (60) includes a hollow sleeve portion (61) screwed into the third tube (33), thereby forming a second vent hole (62), and wherein an actuating pin (63) axially passing through the second vent hole (62) is mounted on the sleeve portion (61), and wherein a spring (64) is mounted on the sleeve portion (61), and wherein the tail of the sleeve portion (61) is formed into a tapering air inlet (65), and wherein the tail of the actuating pin (63) includes a compression cover (66) for opening and closing the air inlet (65).
